# EUROPÄISCHE PATENTSCHRIFT

(11) **EP 1 337 312 B1**
(45) Veröffentlichungstag und Bekanntmachung des Hinweises auf die Patenterteilung: **22.02.2006**
(21) Anmeldenummer: 01988617.5
(22) Anmeldetag: 23.10.2001
(51) Int. Cl.: B01D 46/10, A47H 23/08

(54) **VERWENDUNG TEXTILER FLÄCHENGEBILDE MIT TEXTURIERTEM FADENMATERIAL ALS POLLENSCHUTZ FÜR FENSTER UND TÜREN**
USE OF PLANAR TEXTILE STRUCTURES COMPRISING TEXTURED YARNS AS PROTECTION AGAINST POLLEN FOR WINDOWS AND DOORS
UTILISATION DE STRUCTURES TEXTILES PLANES A FILS TEXTURES SERVANT DE SYSTEMES DE PROTECTION CONTRE LES POLLENS SUR DES FENETRES ET DES PORTES

(30) Priorität: 26.10.2000 DE 10053228
(43) Veröffentlichungstag der Anmeldung: 27.08.2003
(73) Patentinhaber: tesa AG, 20253 Hamburg (DE)
(72) Erfinder: SCHRÖDER, Andreas, 22301 Hamburg (DE)
(86) Internationale Anmeldenummer: PCT/EP2001/012213
(87) Internationale Veröffentlichungsnummer: WO 2002/034362

(56) Entgegenhaltungen:
- EP-A- 0 841 084
- US-A- 5 312 467
- MATTHES M.: 'TEXTIL-WÖRTBUCH', 1985, SCHIELE & SCHÖN, BERLIN * Seite 212 - Seite 213 *

## Beschreibung

Die Erfindung bezieht sich auf ein textiles Flächengebilde mit texturiertem Fadenmaterial, welches als Schutz vor dem Eindringen staubförmiger, durch die Atmosphärenluft transportierter Allergene wie z.B. Pollenstaub und Pilzsporen in Wohn- und Arbeitsräume durch die vollflächige Anbringung vor Fenstern und Türen eingesetzt wird.

Seit mehreren Jahren wird in der Bundesrepublik das Auftreten von Pollinose (Heuschnupfen), also der allergischen Reaktion der Schleimhäute des Auges sowie der oberen und unteren Atemwege mit Blütenpollen und anderen durch die Luft transportierten Allergenen, in der Bevölkerung verfolgt. Dabei wurde ermittelt, dass in Deutschland in den letzten Jahren der Bevölkerungsanteil bei etwa 11-15% liegt. Die allergische Reaktion einer Pollenallergie äußert sich meist durch Rötungen und Tränenfluss der Augen (Konjunktivitis), Niesattacken (Rhinitis) sowie Reizhusten (Asthma bronchiale) als Frühreaktionen. Als Spätreaktion auf die Pollenallergie sind z.B. Neurodermitis oder Ekzeme an der Haut bekannt. Als weitreichendere Konsequenzen neben den persönlichen Beschwerden der Betroffenen lassen sich Verdienstausfall bzw. Arbeitsunfähigkeit während der Pollenflugperiode oder Anstieg von ärztlichen Behandlungskosten leicht ableiten, so dass für ein Pollenschutzgitter im Sinne der Erfindung zur Anbringung vor Fenster und Türen von Wohn- und Arbeitsräumen ein großer Bedarf besteht. Weiteres über Pollinose lässt sich im Ratgeber Pollenallergie, Ute Künkele, München 1992 recherchieren.

Ein Pollenschutz für Fenster und Türen muss dem Anwender als wesentlichste Eigenschaften eine ausreichende Belüftbarkeit der Räumlichkeiten bieten, eine genügende Transparenz für den Lichteinfall bzw. den Blick nach draußen und eine lindernde Wirkung bezüglich der Pollenallergie. Die wichtigsten Parameter zur Beschreibung eines Pollenschutzes sind demnach die Luftdurchlässigkeit, die optische Transparenz sowie die Filterwirkung gegenüber Pollen.

Vollflächig vor Fenstern und Türen angebrachte Schutzsysteme, die das Eindringen von größeren Objekten wie z.B. Insekten in Wohnräume verhindern sollen, sind bekannt (= Fliegengitter). In DE 3045723 werden z.B. Gardinen, Netze, Filter oder Siebe für einen solchen Zweck beschrieben, die mittels Druckknöpfen an Fenster- oder Türrahmen angebracht werden. Aufgrund ihrer relativ großen Maschenweiten von 1 - 2 mm besitzen diese keine ausreichende Schutzwirkung vor Pollenstaub (Größe etwa 10 - 50µm) und Pilzsporen (Größe etwa 200µm).

Filtrationseinrichtungen, die Luft völlig von Pollen, Keimen und Sporen befreien, finden Einsatz in der Klimatechnik und im Automobil. Die hohe Filterwirkung wird in DE 3904623 z.B. dadurch erreicht, dass Filtermatten, auch oft mehrlagig, aus Vliesstoffen eingesetzt werden, die durch ihre Faserigkeit die Filterstufe unpassierbar für o.a. Allergene machen. Zur Erhöhung des Kontaktes der partikelbeladenen Luft mit dem Filter wird das Laminat aus Filtermatten zusätzlich zickzackgefaltet. Solche Filtermatten besitzen jedoch aufgrund ihrer nicht vorhandenen visuellen Transparenz keine Eignung als Schutzvorrichtung im Sinne der vorgeschlagenen Erfindung. Darüberhinaus entstehen bei solchen Filtern für Klimaanlagen in Automobilen wesentlich höhere Staudrücke als bei der Anwendung vor einer Fensterfläche durch die auftreffende Luftbewegung, so dass Filtervliese verwendet werden müssen. Ein Einsatz von Filtervliesen vollflächig vor Fenstern eignet sich aufgrund mangelnder visueller Transparenz nicht als Pollenschutz im erfinderischen Sinne.

Eine weitere vor Fenstern angebrachte Schutzvorrichtung gegen Pollen, Keime und Sporen wird z.B. in DE 4300422 angegeben. Hier erfolgt die Anbringung eines Stoffmaterials als Schutzvorrichtung jedoch nicht vollflächig vor der Fensterscheibe, sondern in den beiden keilartigen Zwischenräumen sowie der rechteckigen Öffnung an der Oberseite eines in Kippstellung stehenden Fensters. Das Problem der nicht vorhandenen, visuellen Transparenz des Schutzes wird durch diese Art der Anbringung umgangen, jedoch muss der Schutz für eine völlige Öffnung des Fensters zu Lüftungszwecken durch Aufschwenken entfernt werden, so dass keine Schutzwirkung mehr existent ist.

Weiterhin besteht die Möglichkeit, mit einem Gewebe einzig durch das Einstellen der Maschenweite die in eine Räumlichkeit einströmende Luft von Pollen zu reinigen. Die Größen der meisten in Europa vorkommenden, allergieauslösenden Pollen, im wesentlichen Birke, Süßgräser, Gänse- und Beifuß, Wegerich, Hasel, liegen in der Region von 20 - 40 µm. Die für eine rein mechanische Filterung notwendige Maschenweite beträgt daher wenigstens 20 µm und lässt daher keine ausreichende visuelle Transparenz und Luftdurchlässigkeit mehr zu.

Aufgabe der vorgeschlagenen Erfindung ist es, die Eigenschaften Luftdurchlässigkeit, visuelle Transparenz und genügende Filterwirkung gegen Pollen in einem Schutzsystem zu verwirklichen. Kennzeichnend ist dabei, dass der Pollenschutz bei ausreichender Filterwirkung von 70-80% Abscheidegrad gegen Pollenstaub noch eine ausreichende Erneuerung der Raumluft sowie eine ausreichende visuelle Transparenz zulässt. Gute Werte für Luftdurchlässigkeiten, die eine akzeptable Belüftung eines Raumes erlauben, liegen im Größenbereich von größer als 20000 m³/m²/h bei einem Differenzdruck von 300 Pa. Eine ausreichende Transparenz im Sinne der Erfindung liegt zwischen 20 und 100% Transmission. Gelöst wird die Aufgabe der ausreichenden visuellen Transparenz und Luftdurchlässigkeit bei gleichzeitiger genügender Filterwirkung durch die Verwendung eines textilen Flächengebildes, bei dem das Fadenmaterial ausschließlich oder teilweise durch texturierte Fäden ersetzt wird.

Die Texturierung von Fadenmaterial wird vorrangig für textile Flächengebilde aus Chemiefasern wie Polyester oder Polyamid eingesetzt, um den Kunstfasern einen naturfaserähnlichen Charakter zu geben. Chemiefasern unterscheiden sich bei der Verspinnung zu Garnen von Naturfasern in der Länge der zu verspinnenden Filamente. Bei Chemiefasern werden Endlosfilamente eingesetzt, die nach der Verspinnung zum Garn eine parallele Lage zueinander besitzen und dem Garn ein glattes Anfaßvermögen geben. Die Filamentlänge bei Naturfasern ist wesentlich kürzer und nur beträgt wenige Zentimeter. Bei der Verspinnung von kurzen Filamentlängen wie beispielsweise bei Baumwolle erhält dieser durch die herausstehenden Filamentenden eine Bauschigkeit.

Die Texturierung von Fadenmaterial aus künstlichen Endlosfilamenten kann beispielsweise durch die Deformation der Filamente aus ihrer Parallellage durch Torsion oder Biegung mit anschließender Thermofixierung vorgenommen. Ein Beispiel dafür ist das sog. Falschdrahtverfahren [Grundlagen der Textilveredelung", 13. Überarbeitete Auflage, Deutsch Fachbuchverlag 1989].

Der Ausdruck textile Flächengebilde beschreibt die Gesamtheit aller Möglichkeiten, aus Fadenmaterial durch gängige Flächenbildungsprozesse wie Stricken, Wirken oder Weben Textilien darzustellen. Grundlegendes über die textile Flächenbildungsprozesse lässt sich in Alfons Hofer: "Stoffe 2", 1983, Deutsch Fachbuchverlag oder "Kettwirkpraxis", Heft 4, 1970, Seite 19-20, Technologien der Kettwirkerei recherchieren.

Häufig werden textile Flächengebilde aus Chemiefasern wie Polyester mit texturiertem Fadenmaterial aufgrund ihrer angenehmen Haptik für Bekleidungszwecke verwendet beispielsweise als Frontfixierung im hochwertigen Oberbekleidungsbereich verwendet. Der Einsatz als Pollenschutz vor Fensterflächen und Türöffnungen sowie für sonstige Lüftungseintritte ist ein neues Anwendungsfeld und soll geschützt werden.

Der Einsatz eines textilen Flächengebildes mit texturierten Fäden bietet gegenüber dem zitierten Ansatz, einzig durch die Verringerung der Maschenweite eine Filtration von Pollen zu erzielen, den Vorteil, dass ohne die prozessseitige Verringerung der Maschenweite eine höhere Filterwirkung erzielt werden kann, da die Filamente des texturierten Fadens die eigentliche Maschenweite verengen und dadurch Abstände zwischen den Filamenten zustande kommen, die unpassierbar für Pollen sind. Hinzu kommt, dass durch die Aufbauschung der Fäden eine Ausdehnung des zweidimensionalen Flächengebildes in die dritte Dimension stattfindet. Die texturierten Fäden bedeuten somit einerseits durch einen längeren Strömungsweg eine größere Kontaktzeit der Luft mit dem Filtermaterial und andererseits eine Vergrößerung der Filteroberfläche, die zu verbesserten Filtereigenschaften führen.

Auf diese Art ist beispielsweise eine höhere Luftdurchlässigkeit möglich, die eine bessere Belüftung der Räumlichkeiten ermöglicht, da für die Filtereigenschaft die Maschenweite nicht auf den Durchmesser der zu filternden Pollen erniedrigt werden muss.

## Patentansprüche

1. Verwendung von textilen Flächengebilden, die texturiertes Fadenmaterial enthalten, zur Anbringung vor Fenstern oder Türen zum Schutz vor staubförmigen Allergenen wie Pollen oder Hausstaub.

## Claims

1. Use of textile fabrics which contain textured yarn material for attachment in front of windows or doors to guard against dusty allergens such as pollen or house dust.

## Revendications

1. Utilisation de structures planes textiles qui contiennent des fils en un matériau texturé, destinées à être installées devant des fenêtres ou des portes pour une protection contre les allergènes poussiéreux tels que les pollens ou les poussières de maison.
